# EUROPEAN PATENT APPLICATION

(11) **EP 4 202 885 A1**
(43) Date of publication of application: **28.06.2023**
(21) Application number: 21871294.1
(22) Date of filing: 10.09.2021
(51) Int. Cl.: G08G 1/0967, G08G 1/16, B60R 11/04

(54) **DEVICE CONTROL METHOD AND APPARATUS, AND DEVICE**

(30) Priority: 24.09.2020 CN 202011018356
(71) Applicant: Huawei Technologies Co., Ltd., Shenzhen, Guangdong 518129 (CN)
(72) Inventor: ZHANG, Xiaoyu, Shenzhen, Guangdong 518129 (CN)
(74) Representative: Grünecker Patent- und Rechtsanwälte PartG mbB
(86) International application number: PCT/CN2021/117830
(87) International publication number: WO 2022/062923

(57) **Abstract**

Embodiments of this application provide a device control method and apparatus, and a device, applied to a vehicle. At least two rotatable photographing apparatuses are disposed on the vehicle. The method includes: obtaining a running mode of the vehicle; determining photographing information of each photographing apparatus based on the running mode, where the photographing information includes a photographing direction and a rotation speed; and controlling, based on the photographing information, each photographing apparatus to obtain a plurality of images through photographing, where the plurality of images are used to assist the vehicle in running. This improves timeliness of controlling the vehicle.

## Description

This application claims priority to Chinese Patent Application No. 2020110183 56.X, filed with the China National Intellectual Property Administration on September 24, 2020 and entitled "DEVICE CONTROL METHOD AND APPARATUS, AND DEVICE", which is incorporated herein by reference in its entirety.

### TECHNICAL FIELD

This application relates to the field of intelligent driving and intelligent vehicle technologies, and in particular, to a device control method and apparatus, and a device.

### BACKGROUND

A plurality of photographing apparatuses may be disposed on a vehicle. The photographing apparatus may collect an image around the vehicle. The vehicle may process the image collected by the photographing apparatus, and assist, based on a processing result of the image, the vehicle in traveling.

For a special vehicle (for example, an autonomous vehicle), to ensure traveling safety, a plurality of photographing apparatuses usually need to be mounted on the vehicle, and a plurality of images collected by the plurality of photographing apparatuses are processed. However, because a large quantity of images need to be processed, it takes a long time to obtain an image processing result. Consequently, the vehicle cannot be controlled in a timely manner based on the image processing result.

### SUMMARY

This application provides a device control method and apparatus, and a device, to improve timeliness of controlling a vehicle.

According to a first aspect, an embodiment of this application provides a device control method, applied to a vehicle, where at least two rotatable photographing apparatuses are disposed on the vehicle, and the method includes: obtaining a running mode of the vehicle; determining photographing information of each photographing apparatus based on the running mode, where the photographing information includes a photographing direction and a rotation speed; and controlling, based on the photographing information, each photographing apparatus to obtain a plurality of images through photographing, where the plurality of images are used to assist the vehicle in running.

In the foregoing process, a small quantity of rotatable photographing apparatuses may be mounted on the vehicle, and a direction, a rotation speed, and the like of the photographing apparatus are controlled based on traveling information of the vehicle, so that a region that needs to be focused on can be photographed by the photographing apparatus, and most regions in a region that does not need to be focused on can be photographed by the photographing apparatus. In this way, the vehicle can safely travel based on an image obtained by the photographing apparatus through photographing. In addition, because a small quantity of images are obtained through photographing, the vehicle only needs to process a small quantity of images. Therefore, the vehicle can quickly determine an obtained image processing result, and assist, in a timely manner based on the image processing result, the vehicle in traveling.

In a possible implementation, the running mode includes any one of the following: a traveling mode, an obstacle mode, a parking mode, and a self-check mode.

In a possible implementation, the photographing information of each photographing apparatus may be determined based on the running mode in the following manner: determining a photographing region of each photographing apparatus based on the running mode; and determining the photographing information of each photographing apparatus based on the photographing region of each photographing apparatus.

In the foregoing process, the photographing region of the photographing apparatus is related to the running mode of the vehicle, so that the photographing apparatus can obtain, through photographing, an image of a region that needs to be focused on. In this way, the vehicle only needs to process a small quantity of images, to assist the vehicle in safe traveling.

In a possible implementation, when the running mode is a traveling mode or an obstacle mode, the photographing region of each photographing apparatus may be determined in the following manner: determining, based on the running mode, a key region and a non-key region that are to be monitored, where the key region and the non-key region are regions around of the vehicle; and determining the photographing region of each photographing apparatus based on the key region, the non-key region, and a mounting location of each photographing apparatus on the vehicle.

In the foregoing process, the photographing region falls into the key region and the non-key region, so that the photographing apparatus can focus on photographing an image in the key region.

In a possible implementation, for any first photographing apparatus, determining photographing information of the first photographing apparatus based on a photographing region of the first photographing apparatus includes: obtaining a type of the photographing region of the first photographing apparatus, where the type of the photographing region is a key region type or a non-key region type; and determining the photographing information of the first photographing apparatus based on the type of the photographing region of the first photographing apparatus.

In the foregoing process, the type of the photographing region indicates whether the photographing region is a key region. Therefore, photographing information of the photographing apparatus may be accurately determined based on the type of the photographing region of the photographing apparatus.

In a possible implementation, if the photographing region of the first photographing apparatus is a key region, the photographing information of the first photographing apparatus meets the following conditions: a region corresponding to a photographing direction of the first photographing apparatus covers the photographing region of the first photographing apparatus; and a rotation speed of the first photographing apparatus is zero.

In the foregoing process, if the first photographing apparatus photographs the key region, the region corresponding to the photographing direction of the first photographing apparatus covers the photographing region of the first photographing apparatus, so that the key region can be totally photographed. Because the rotation speed of the first photographing apparatus is zero, a photographing effect of the first photographing apparatus on the key region is good.

In a possible implementation, if the photographing region of the first photographing apparatus is a non-key region, the photographing information of the first photographing apparatus meets the following conditions: a region corresponding to a photographing direction of the first photographing apparatus covers the photographing region of the first photographing apparatus; and a rotation speed of the first photographing apparatus is less than or equal to a first threshold.

In the foregoing process, if the first photographing apparatus photographs the non-key region, the first photographing apparatus may totally photograph the non-key region through rotation. Because the rotation speed of the first photographing apparatus is less than or equal to the first threshold, a photographing effect of the first photographing apparatus may be good.

In a possible implementation, when the running mode is a traveling mode, and the key region and the non-key region that are to be monitored may be determined in the following manner: obtaining traveling information of the vehicle; and determining the key region and the non-key region based on the traveling mode and the traveling information.

In the foregoing process, the determined key region and the determined non-key region are related to the traveling information of the vehicle, so that the determined key region and the determined non-key region are more accurate.

In a possible implementation, when the running mode is an obstacle mode, and the key region and the non-key region that are to be monitored may be determined in the following manner: obtaining location information of an obstacle; and determining the key region and the non-key region based on the obstacle mode and the location information.

In the foregoing process, the determined key region and the determined non-key region are related to the location information of the obstacle, so that the determined key region and the determined non-key region are more accurate.

In a possible implementation, when the running mode is a parking mode, angles between photographing directions of every two adjacent photographing apparatuses are the same, and rotation speeds of all the photographing apparatuses are the same.

In a possible implementation, when the running mode is the self-check mode, the method further includes: obtaining at least two images obtained by a second photographing apparatus through photographing, where the second photographing apparatus is any one of the at least two rotatable photographing apparatuses; and if a feature similarity between same regions in the at least two images is greater than a second threshold, determining that a stain exists on a photographing lens of the second photographing apparatus.

According to a second aspect, an embodiment of this application provides a device control apparatus, applied to a vehicle, where at least two rotatable photographing apparatuses are disposed on the vehicle, and the apparatus includes an obtaining module, a determining module, and a control module, where
the obtaining module is configured to obtain a running mode of the vehicle;
the determining module is configured to determine photographing information of each photographing apparatus based on the running mode, where the photographing information includes a photographing direction and a rotation speed; and
the control module is configured to control, based on the photographing information, each photographing apparatus to obtain a plurality of images through photographing, where the plurality of images are used to assist the vehicle in running.

In a possible implementation, the running mode includes any one of the following: a traveling mode, an obstacle mode, a parking mode, and a self-check mode.

In a possible implementation, the determining module is specifically configured to:
determine a photographing region of each photographing apparatus based on the running mode; and
determine the photographing information of each photographing apparatus based on the photographing region of each photographing apparatus.

In a possible implementation, the running mode is a traveling mode or an obstacle mode, and the determining module is specifically configured to:
determine, based on the running mode, a key region and a non-key region that are to be monitored, where the key region and the non-key region are regions around of the vehicle; and
determine the photographing region of each photographing apparatus based on the key region, the non-key region, and a mounting location of each photographing apparatus on the vehicle.

In a possible implementation, for any first photographing apparatus, the determining module is specifically configured to:
obtain a type of the photographing region of the first photographing apparatus, where the type of the photographing region is a key region type or a non-key region type; and
determine photographing information of the first photographing apparatus based on the type of the photographing region of the first photographing apparatus.

In a possible implementation, if the photographing region of the first photographing apparatus is a key region, the photographing information of the first photographing apparatus meets the following conditions:
a region corresponding to a photographing direction of the first photographing apparatus covers the photographing region of the first photographing apparatus; and
a rotation speed of the first photographing apparatus is zero.

In a possible implementation, if the photographing region of the first photographing apparatus is a non-key region, the photographing information of the first photographing apparatus meets the following conditions:
a region corresponding to a photographing direction of the first photographing apparatus covers the photographing region of the first photographing apparatus; and
a rotation speed of the first photographing apparatus is less than or equal to a first threshold.

In a possible implementation, the running mode is a traveling mode, and the determining module is specifically configured to:
obtain traveling information of the vehicle; and
determine the key region and the non-key region based on the traveling mode and the traveling information.

In a possible implementation, the running mode is an obstacle mode, and the determining module is specifically configured to:
obtain location information of an obstacle; and
determine the key region and the non-key region based on the obstacle mode and the location information.

In a possible implementation, the running mode is a parking mode, angles between photographing directions of every two adjacent photographing apparatuses are the same, and rotation speeds of all the photographing apparatuses are the same.

In a possible implementation, the running mode is a self-check mode, and the determining module is further configured to:
obtain at least two images obtained by a second photographing apparatus through photographing, where the second photographing apparatus is any one of the at least two rotatable photographing apparatuses; and
if a feature similarity between same regions in the at least two images is greater than a second threshold, determine that a stain exists on a photographing lens of the second photographing apparatus.

According to a third aspect, an embodiment of this application provides a data processing apparatus. The data processing apparatus includes a memory and a processor. The memory stores computer program instructions, and the processor runs the computer program instructions to perform the method according to any implementation of the first aspect.

According to a fourth aspect, an embodiment of this application provides a device control apparatus, including an input interface 31 and a logic circuit 32.

The input interface is configured to obtain a running mode of a vehicle.

The logic circuit is configured to: determine photographing information of each photographing apparatus based on the running mode, and control, based on the photographing information, each photographing apparatus to obtain a plurality of images through photographing, where the photographing information includes a photographing direction and a rotation speed, and the plurality of images are used to assist the vehicle in running.

In a possible implementation, the logic circuit is further configured to perform the method according to any implementation of the first aspect.

According to a fifth aspect, an embodiment of this application provides a computer storage medium, including computer instructions. When the computer instructions are run by a processor, the method according to any implementation of the first aspect is implemented.

According to a sixth aspect, an embodiment of this application provides a computer program product. When the computer program product runs on a processor, the method according to any implementation of the first aspect is implemented.

According to the device control method and apparatus, and the device that are provided in embodiments of this application, a small quantity of rotatable photographing apparatuses may be mounted on the vehicle, and a direction, a rotation speed, and the like of the photographing apparatus are controlled based on traveling information of the vehicle, so that a region that needs to be focused on can be photographed by the photographing apparatus, and most regions in a region that does not need to be focused on can be photographed by the photographing apparatus. In this way, the vehicle can safely travel based on an image obtained by the photographing apparatus through photographing. In addition, because a small quantity of images are obtained through photographing, the vehicle only needs to process a small quantity of images. Therefore, the vehicle can quickly determine an obtained image processing result, and assist, in a timely manner based on the image processing result, the vehicle in traveling.

### BRIEF DESCRIPTION OF DRAWINGS

FIG. 1 is a diagram of an application scenario according to an embodiment of this application;
FIG. 2 is a schematic diagram of a photographing apparatus in a vehicle according to an embodiment of this application;
FIG. 3 is a schematic flowchart of a data processing method according to an embodiment of this application;
FIG. 4 is a schematic diagram of a page for setting a running mode according to an embodiment of this application;
FIG. 5 is a schematic diagram of a page for switching a running mode according to an embodiment of this application;
FIG. 6 is a schematic flowchart of another device control method according to an embodiment of this application;
FIG. 7A is a schematic diagram of a key region and a non-key region according to an embodiment of this application;
FIG. 7B is a schematic diagram of another key region and another non-key region according to an embodiment of this application;
FIG. 7C is a schematic diagram of still another key region and still another non-key region according to an embodiment of this application;
FIG. 7D is a schematic diagram of yet another key region and yet another non-key region according to an embodiment of this application;
FIG. 8 is a schematic diagram of a photographing region according to an embodiment of this application;
FIG. 9 is a schematic diagram of a display page of a vehicle-mounted device according to an embodiment of this application;
FIG. 10 is a schematic flowchart of still another device control method according to an embodiment of this application;
FIG. 11A is a schematic diagram of still yet another key region and still yet another non-key region according to an embodiment of this application;
FIG. 11B is a schematic diagram of a further key region and a further non-key region according to an embodiment of this application;
FIG. 12 is a schematic flowchart of still another device control method according to an embodiment of this application;
FIG. 13 is a schematic diagram of a photographing direction of a photographing apparatus according to an embodiment of this application;
FIG. 14 is a schematic diagram of a structure of a device control apparatus according to an embodiment of this application;
FIG. 15 is a schematic diagram of a hardware structure of a device control apparatus according to this application; and
FIG. 16 is a schematic diagram of a structure of another device control apparatus according to an embodiment of this application.

### DESCRIPTION OF EMBODIMENTS

For ease of understanding, an application scenario in this application is first described.

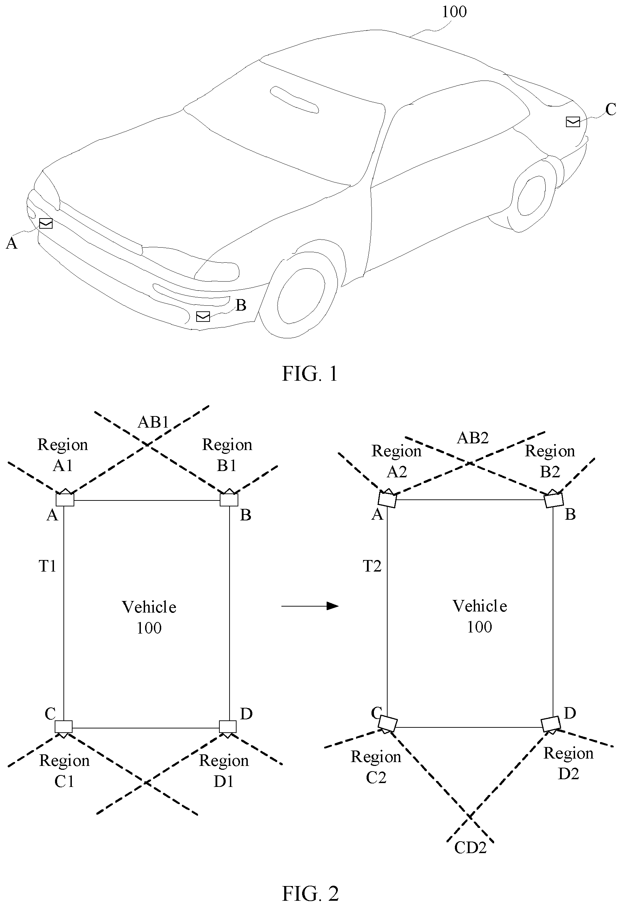

FIG. 1 is a diagram of an application scenario according to an embodiment of this application. Refer to FIG. 1. A vehicle 100 is included, and a plurality of photographing apparatuses are disposed on the vehicle 100. For example, a photographing apparatus A, a photographing apparatus B, and a photographing apparatus C are shown in the figure. The photographing apparatus may rotate. When the photographing apparatus rotates to different directions, the photographing apparatus may obtain images of different regions around a vehicle body through photographing. With reference to FIG. 2, the following describes a rotatable photographing apparatus.

FIG. 2 is a schematic diagram of a photographing apparatus in a vehicle according to an embodiment of this application. FIG. 2 is a top view of a vehicle. Refer to FIG. 2. A photographing apparatus A, a photographing apparatus B, a photographing apparatus C, and a photographing apparatus D are disposed on the vehicle 100. The four photographing apparatuses are respectively disposed at four corners of the vehicle. The photographing apparatus is a rotatable photographing apparatus, so that the photographing apparatus can obtain images of different regions through photographing.

The rotatable photographing apparatus may rotate in a horizontal direction, for example, may rotate at 360 degrees in the horizontal direction. That is, a yawing angle of the photographing apparatus may change. When the yawing angle of the photographing apparatus varies, the photographing apparatus may obtain images of different regions around the vehicle body through photographing. For example, refer to FIG. 2. At a moment T1, the photographing apparatus A may obtain an image of a region A1 through photographing, and the photographing apparatus B may obtain an image of a region B1 through photographing. An overlapping region between the region A1 and the region B 1 is a region AB 1. The photographing apparatus C may obtain an image of a region C1 through photographing, and the photographing apparatus D may obtain an image of a region D1 through photographing. An overlapping region between the region C1 and the region D1 is a region CD1. For example, at a moment T2, the photographing apparatus A, the photographing apparatus B, the photographing apparatus C, and the photographing apparatus D rotate in the horizontal direction. The photographing apparatus A may obtain an image of a region A2 through photographing, and the photographing apparatus B may obtain an image of a region B2 through photographing. An overlapping region between the region A2 and the region B2 is a region AB2. The photographing apparatus C may obtain an image of a region C2 through photographing, and the photographing apparatus D may obtain an image of a region D2 through photographing. An overlapping region between the region C2 and the region D2 is a region CD2.

Optionally, the photographing apparatus may further rotate in a vertical direction, that is, a tilting angle of the photographing apparatus may change. When the tilting angle of the photographing apparatus varies, regions photographed by the photographing apparatus are also different. For example, when the tilting angle of the photographing apparatus is large, the photographing apparatus may obtain an image in a long distance in front of the photographing apparatus through photographing; or when the tilting angle of the photographing apparatus is small, the photographing apparatus may obtain an image in a short distance in front of the photographing apparatus through photographing.

In a traveling process of the vehicle, when a traveling cases of the vehicle are different, regions that need to be focused on are also different. For example, when the vehicle moves forward, a region in front of the vehicle needs to be focused on. When the vehicle turns to the right, a front region and a right region on the right of the vehicle need to be focused on. When the vehicle is reversed, a region behind the vehicle needs to be focused on. If there is an obstacle near the vehicle, a region in which the obstacle is located needs to be focused on.

In this application, a small quantity of rotatable photographing apparatuses may be mounted on the vehicle, and a direction, a rotation speed, and the like of the photographing apparatus are controlled based on traveling information of the vehicle, so that a region that needs to be focused on can be photographed by the photographing apparatus, and most regions in a region that does not need to be focused on can be photographed by the photographing apparatus. In this way, the vehicle can safely travel based on an image obtained by the photographing apparatus through photographing. In addition, because a small quantity of images are obtained through photographing, the vehicle only needs to process a small quantity of images. Therefore, the vehicle can quickly determine an obtained image processing result, and assist, in a timely manner based on the image processing result, the vehicle in traveling.

The following describes in detail the technical solutions in this application by using specific embodiments. It should be noted that the following embodiments may exist independently, or may be combined with each other, and same or similar content is not repeatedly described in different embodiments.

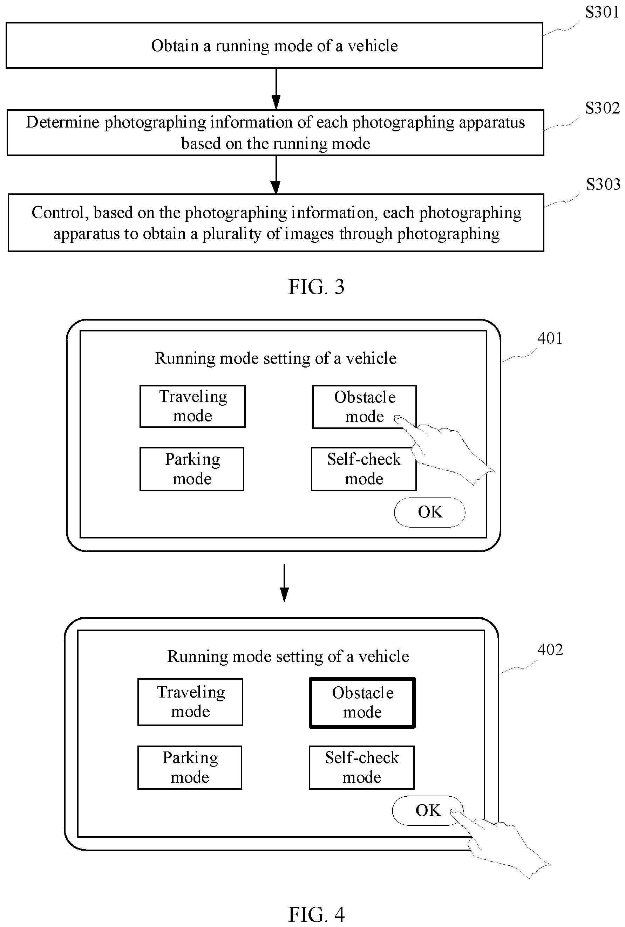

FIG. 3 is a schematic flowchart of a data processing method according to an embodiment of this application. Refer to FIG. 3. The method may include the following steps.

S301: Obtain a running mode of a vehicle.

The running mode of the vehicle may include any one of the following: a traveling mode, an obstacle mode, a parking mode, and a self-check mode. For ease of understanding, the four modes are described first:

### Traveling mode:

In a traveling process of the vehicle, the vehicle may be set to the traveling mode.

When the vehicle is in the traveling mode, a key region that the photographing apparatus focuses on photographing is related to traveling information of the vehicle. For example, if the vehicle moves forward, the photographing apparatus focuses on photographing a region in front of the vehicle. If the vehicle moves backwards, the photographing apparatus focuses on photographing a region behind the vehicle. If the vehicle turns to the right for traveling, the photographing apparatus focuses on photographing a region on the front right of the vehicle. If the vehicle turns to the left, the photographing apparatus focuses on photographing a region on the front left of the vehicle.

### Obstacle mode:

In a traveling process of the vehicle, the vehicle may be set to the obstacle mode.

When the vehicle is in the obstacle mode, a region that the photographing apparatus focuses on photographing is related to a location of an obstacle, and the photographing apparatus focuses on photographing a region in which the obstacle is located.

### Parking mode:

When the vehicle is parked or stalled, a mode of the vehicle may be set to the parking mode.

When the vehicle is in the parking mode, the photographing apparatus evenly photographs all regions around the vehicle.

### Self-check mode:

In a traveling process or a driving process of the vehicle, the vehicle may be set to the self-check mode based on an actual requirement.

When the vehicle is in the self-check mode, each photographing apparatus may rotate, and the photographing apparatus may obtain at least two images through photographing. For any photographing apparatus, it may be determined, based on at least two images obtained by the photographing apparatus through photographing, whether a stain exists on a photographing lens of the photographing apparatus.

Optionally, a user may select the running mode of the vehicle, or the vehicle may automatically set the running mode of the vehicle. The following separately describes the foregoing two manners.

Manner 1: The user selects the running mode of the vehicle.

A vehicle-mounted device may display all running modes, and the user may select the running mode of the vehicle from all the running modes. The user may further switch a current running mode of the vehicle. Optionally, the vehicle-mounted device may be a central control device of the vehicle, user equipment (for example, a mobile phone or a tablet computer), or the like.

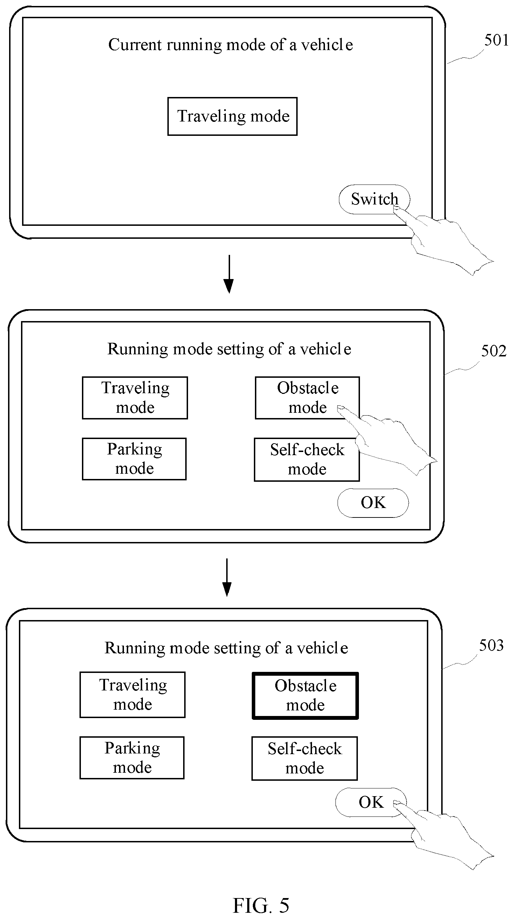

With reference to FIG. 4 and FIG. 5, the following describes, by using a specific example, a process in which the user selects the running mode of the vehicle.

FIG. 4 is a schematic diagram of a page for setting a running mode according to an embodiment of this application. Refer to FIG. 4. A page 401 and a page 402 are included.

Refer to the page 401. When the user needs to set the running mode of the vehicle, the user may input an operation in the vehicle-mounted device, so that the vehicle-mounted device displays a running mode setting page (page 401). The page 401 includes icons corresponding to all running modes of the vehicle and an "OK" icon. For example, all running modes of the vehicle may include the traveling mode, the obstacle mode, the parking mode, and the self-check mode. The user may tap an icon of one running mode to select the running mode. For example, it is assumed that the user needs to set the running mode of the vehicle to the obstacle mode. In this case, the user may tap an icon corresponding to the obstacle mode, so that a state of the icon corresponding to the obstacle mode is switched to a selected state.

Refer to the page 402. The icon corresponding to the obstacle mode is in a selected state, and the user may tap the "OK" icon, so that the running mode of the vehicle is set to the obstacle mode.

In the embodiment shown in FIG. 4, the user may conveniently set the running mode of the vehicle.

FIG. 5 is a schematic diagram of a page for switching a running mode according to an embodiment of this application. Refer to FIG. 5. A page 501 to a page 503 are included.

Refer to the page 501. The page includes a current running mode of the vehicle and a "switch" icon. When the user needs to switch the running mode of the vehicle, the user may perform a tap operation on the "switch" icon, so that the vehicle-mounted device displays the page 502.

Refer to the page 502. The page includes icons corresponding to all running modes of the vehicle and an "OK" icon. The user may tap an icon of one running mode to select the running mode. For example, it is assumed that the user needs to switch the running mode of the vehicle to the obstacle mode. In this case, the user may tap an icon corresponding to the obstacle mode, so that a state of the icon corresponding to the obstacle mode is switched to a selected state.

Refer to the page 503. The icon corresponding to the obstacle mode is in a selected state, and the user may tap the "OK" icon, so that the running mode of the vehicle is set to the obstacle mode.

In the embodiment shown in FIG. 5, the user may conveniently change the running mode of a vehicle.

Manner 2: The vehicle automatically sets the running mode of the vehicle.

The vehicle may obtain sensor data, and determine the running mode of the vehicle based on the sensor data. The sensor data may include at least one piece of the following data: an engine status, an engine revolution speed, a wheel speed, an image that is around the vehicle body and that is collected by the photographing apparatus, and radar data. The engine status may be a start state or a stall state. The wheel speed includes a speed of a left wheel and/or a speed of a right wheel of the vehicle.

A manner of setting each running mode may be as follows:

A manner of setting the parking mode is as follows: When it is determined that a speed of the vehicle is zero, the running mode of the vehicle may be set to the parking mode. Optionally, if the engine status is the stall state, or the engine revolution speed is zero, or the wheel speed is zero, it may be determined that the speed of the vehicle is zero. To avoid incorrect setting, the running mode of the vehicle may be set to the parking mode when the engine status is the stall state or duration in which the speed of the vehicle is zero is greater than preset duration. In this way, a running mode of a vehicle that temporarily parks (for example, parks and waits for a traffic light) may be prevented from being set to the parking mode.

A manner of setting the traveling mode or the obstacle mode is as follows: When it is determined that a speed of the vehicle is greater than zero, it may be determined whether there is an obstacle in a preset distance around the vehicle body. If there is an obstacle, the running mode of the vehicle is set to the obstacle mode; or if there is no obstacle, the running mode of the vehicle is set to the traveling mode. Whether there is an obstacle around the vehicle may be detected in the following manner: obtaining an image obtained by the photographing apparatus through photographing, and recognizing the image, to determine whether there is an obstacle in a preset range around the vehicle. Alternatively, a sensor on the vehicle may be used to detect whether there is an obstacle in a preset range around the vehicle. For example, the sensor may be radar, an infrared apparatus, or the like.

A manner of setting the self-check mode is as follows: A self-check condition may be preset, and when the self-check condition is met, the running mode of the vehicle is set to the self-check mode. For example, the self-check condition may be that the vehicle starts, or current weather is preset weather (for example, a rainy day or a snowy day), or duration from previous self-check is greater than or equal to preset duration.

S302: Determine photographing information of each photographing apparatus based on the running mode.

The photographing information includes a photographing direction and a rotation speed.

The photographing direction may be a direction of a lens of the photographing apparatus.

The rotation speed may be an angle at which the photographing apparatus rotates per unit time. For example, the rotation speed may be θ/s.

Optionally, when the rotation speed is greater than zero, the photographing information may further include an imaging frequency. The imaging frequency is a quantity of times that the photographing apparatus performs scanning at each angle per unit time in a rotation process. That is, the imaging frequency is a quantity of times that the photographing apparatus rotates in the photographing region per unit time, where a process in which the photographing apparatus rotates from one side of the photographing region to the other side is referred to as one time of rotation.

Optionally, the photographing information of each photographing apparatus may be determined in the following manner: determining a photographing region of each photographing apparatus based on the running mode; and determining the photographing information of each photographing apparatus based on the photographing region of each photographing apparatus.

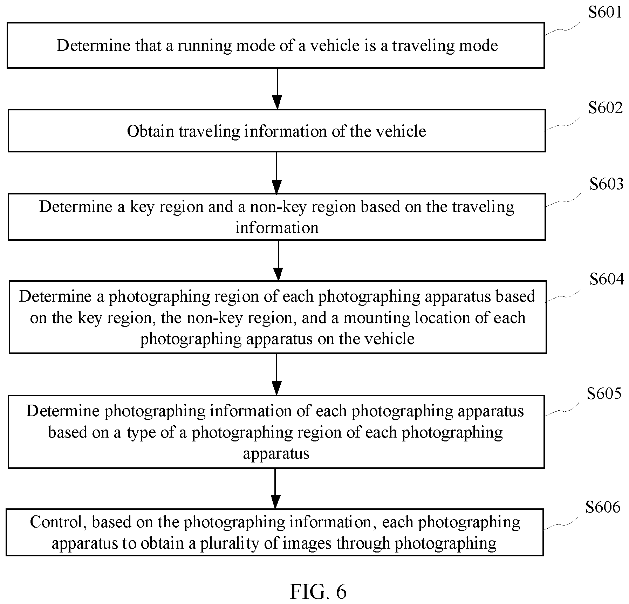

When the running mode varies, the photographing region of the photographing apparatus varies. This is described in embodiments shown in FIG. 6 to FIG. 13, and details are not described herein.

After the photographing region of each photographing apparatus is determined, whether the photographing apparatus needs to rotate may be determined based on a size of the photographing region. If the photographing apparatus does not need to rotate, the photographing direction of the photographing apparatus may be determined, so that the photographing apparatus can photograph a corresponding photographing region. If the photographing apparatus needs to rotate, the rotation speed and a photographing direction range of the photographing apparatus may be determined, so that the photographing apparatus can photograph a corresponding photographing region in a rotation process. In embodiments shown in FIG. 6 to FIG. 13, a process of determining the photographing information of each photographing apparatus is described, and details are not described herein.

S303: Control, based on the photographing information, each photographing apparatus to obtain a plurality of images through photographing.

The plurality of images are used to assist the vehicle in running. For example, the plurality of images may be used to assist the vehicle in autonomous driving.

For any photographing apparatus, a direction of the photographing apparatus may be adjusted based on a photographing direction of the photographing apparatus. If a rotation speed is greater than zero, the photographing apparatus may be controlled, based on the rotation speed, to rotate. After the direction of the photographing apparatus is adjusted and/or the rotation speed of the photographing apparatus is determined, the photographing apparatus may obtain a plurality of images through photographing.

In the embodiment shown in FIG. 3, a small quantity of rotatable photographing apparatuses may be mounted on the vehicle, and a direction, a rotation speed, and the like of the photographing apparatus are controlled based on traveling information of the vehicle, so that a region that needs to be focused on can be photographed by the photographing apparatus, and most regions in a region that does not need to be focused on can be photographed by the photographing apparatus. In this way, the vehicle can safely travel based on an image obtained by the photographing apparatus through photographing. In addition, because a small quantity of images are obtained through photographing, the vehicle only needs to process a small quantity of images. Therefore, the vehicle can quickly determine an obtained image processing result, and assist, in a timely manner based on the image processing result, the vehicle in traveling.

When the running mode of the vehicle varies, a process of controlling the photographing apparatus in the vehicle also varies. The following separately describes a process of controlling the photographing apparatus in each running mode.

FIG. 6 is a schematic flowchart of another device control method according to an embodiment of this application. In the embodiment shown in FIG. 6, a running mode of a vehicle is a traveling mode. Refer to FIG. 6. The method may include the following steps.

S601: Determine that a running mode of a vehicle is a traveling mode.

It should be noted that, it may be determined, in the manner described in S301, that the running mode of the vehicle is the driving mode.

S602: Obtain traveling information of the vehicle.

Optionally, the traveling information of the vehicle may include at least one piece of the following information: a traveling direction, a traveling speed, and a driving scenario.

The traveling direction may include: traveling forward, traveling backward, turning forward to the left, turning forward to the right, turning backward to the left, and turning backward to the right.

The traveling speed may include high-speed traveling, medium-speed traveling, and low-speed traveling.

The driving scenario may include a highway scenario, an urban scenario, a congested road section scenario, and a smooth road section scenario.

Optionally, sensor data collected by a sensor in the vehicle may be obtained, and the traveling information of the vehicle is determined based on the sensor data. The sensor data may include a location, a speed, an image, and the like.

S603: Determine a key region and a non-key region based on the traveling information.

The key region and the non-key region are respectively regions around of the vehicle.

Optionally, the region around the vehicle body includes a key region and a non-key region, or the region around the vehicle body includes a key region, a non-key region, and a non-monitoring region. The non-monitoring region is a region in which the photographing apparatus does not perform photographing, and the non-monitoring region may be set based on an actual requirement.

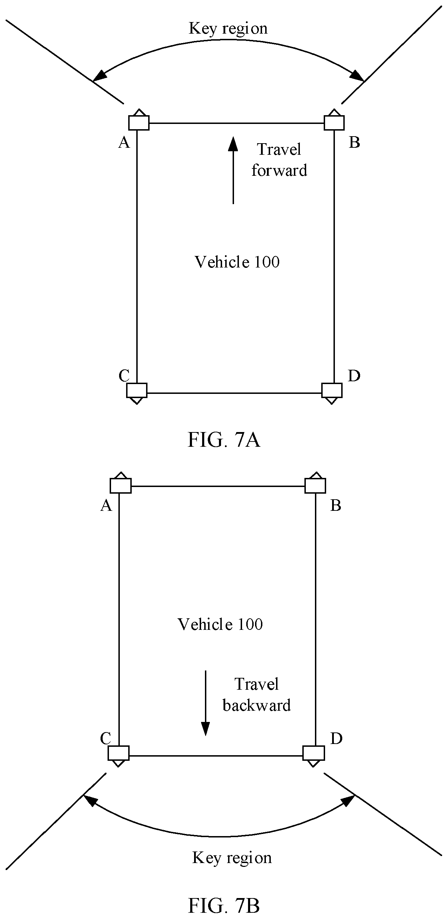

The key region and the non-key region may be determined based on the traveling direction. With reference to FIG. 7A to FIG. 7D, the following describes the key region and the non-key region in the traveling mode by using a specific example.

FIG. 7A is a schematic diagram of a key region and a non-key region according to an embodiment of this application. Refer to FIG. 7A. If the traveling direction of the vehicle is traveling forward, the key region may be a region in front of the vehicle, and the non-key region is a region other than the key region around the vehicle body. For example, the key region may be a region within a range of 120 degrees in front of the vehicle.

FIG. 7B is a schematic diagram of another key region and another non-key region according to an embodiment of this application. Refer to FIG. 7B. If the traveling direction of the vehicle is traveling backward, the key region may be a region behind the vehicle, and the non-key region is a region other than the key region around the vehicle body. For example, the key region may be a region within a range of 120 degrees behind the vehicle.

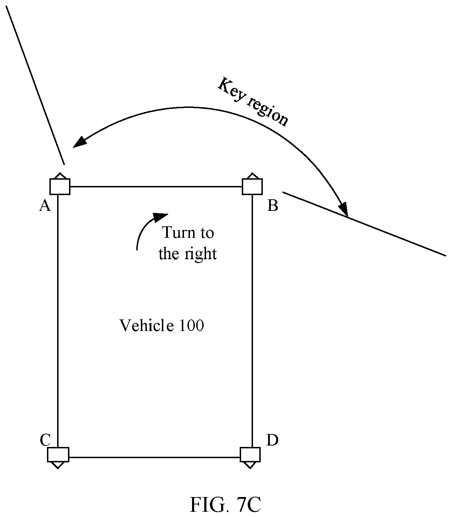

FIG. 7C is a schematic diagram of still another key region and still another non-key region according to an embodiment of this application. Refer to FIG. 7C. If the traveling direction of the vehicle is turning to the right, the key region may be a region in front of and on the right of the vehicle, and the non-key region is a region other than the key region around the vehicle body.

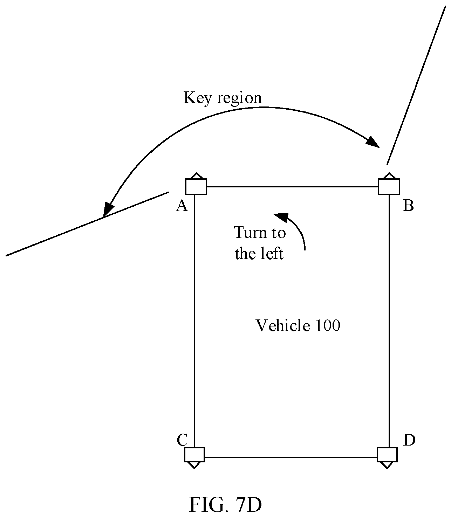

FIG. 7D is a schematic diagram of yet another key region and yet another non-key region according to an embodiment of this application. Refer to FIG. 7D. If the traveling direction of the vehicle is turning to the left, the key region may be a region in front of and on the left of the vehicle, and the non-key region is a region other than the key region around the vehicle body.

Optionally, the key region and the non-key region that are determined based on the traveling direction may be further adjusted based on the traveling speed and/or the driving scenario. For example, if the traveling speed is high, a range of the key region may be increased; or if the driving scenario is an urban scenario or a congested road section scenario, a range of the key region may be increased.

Optionally, a tilting angle of the photographing apparatus may be further adjusted based on the traveling speed of the vehicle. For example, if the vehicle travels at a high speed, the tilting angle of the photographing apparatus is set to a large value, so that the photographing apparatus can obtain an image in a long distance from the vehicle through photographing. If the vehicle travels at a low speed, the tilting angle of the photographing apparatus is set to a small value, so that the photographing apparatus obtains an image in a short distance from the vehicle through photographing.

S604: Determine a photographing region of each photographing apparatus based on the key region, the non-key region, and a mounting location of each photographing apparatus on the vehicle.

At least one photographing apparatus corresponding to the key region may be determined from a plurality of photographing apparatuses based on a location of the key region and the mounting location of the photographing apparatus on the vehicle, and a photographing region of each photographing apparatus in the at least one photographing apparatus is determined from the key region. A photographing region of each photographing apparatus in a remaining photographing apparatus (a photographing apparatus other than the at least one photographing apparatus in the plurality of photographing apparatuses) is determined from the non-key region.

A photographing apparatus that is in the plurality of photographing apparatuses and that is close to the key region may be determined as the at least one photographing apparatus corresponding to the key region. Optionally, if one continuous key region corresponds to at least two photographing apparatuses, photographing regions of the at least two photographing apparatuses may have an overlapping part. In this way, a richer image of the key region may be obtained through photographing by using the photographing apparatus, so that the vehicle can be controlled more reliably based on the image through photographing.

Optionally, an overlapping degree of the photographing regions of the at least two photographing apparatuses corresponding to one continuous key region is greater than or equal to a preset threshold, and the overlapping degree may be a ratio of an overlapping between the photographing regions of the at least two photographing apparatuses to the key region. The ratio of the overlapping region to the key region may be a ratio of an area of the overlapping region to an area of the key region, or a ratio of a photographing angle corresponding to the overlapping region to a photographing angle corresponding to the key region.

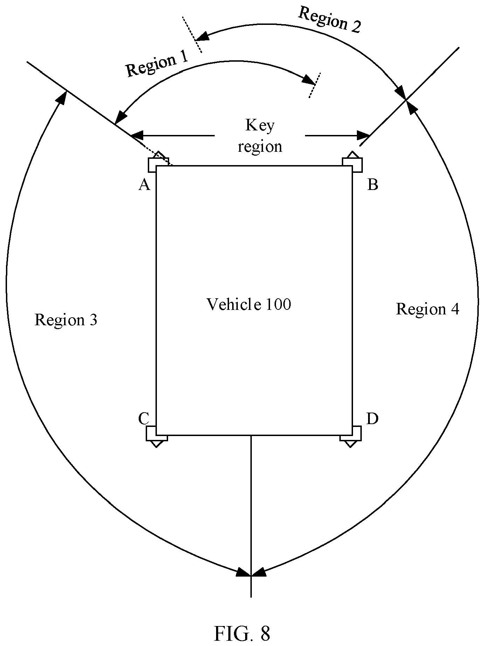

The following describes the photographing region of the photographing apparatus with reference to FIG. 8.

FIG. 8 is a schematic diagram of a photographing region according to an embodiment of this application. Refer to FIG. 8. The traveling direction of the vehicle is traveling forward, and the key region is a region in front of the vehicle. In this case, it may be determined that a photographing region of a photographing apparatus A is a region 1, a photographing region of a photographing apparatus B is a region 2, a photographing region of a photographing apparatus C is a region 3, and a photographing region of a photographing apparatus D is a region 4. The region 1 and the region 2 have an overlapping region. In this way, a richer image of the key region can be obtained through photographing. An overlapping degree of the photographing regions of the photographing apparatus A and the photographing apparatus B is a ratio of the overlapping region between the region 1 and the region 2 to the key region.

S605: Determine photographing information of each photographing apparatus based on a type of a photographing region of each photographing apparatus.

The type of the photographing region of the photographing apparatus is a key region type or a non-key region type.

When the type of photographing region of the photographing apparatus varies, the photographing information of the photographing apparatus also varies. The following describes a process of determining photographing information of any first photographing apparatus in a plurality of photographing apparatuses. The following two cases may be included:
Case 1: A photographing region of the first photographing apparatus is a key region.

In this case, a region corresponding to a photographing direction of the first photographing apparatus covers the photographing region of the first photographing apparatus, and a rotation speed of the first photographing apparatus is zero.

That a region corresponding to a photographing direction of the first photographing apparatus covers the photographing region of the first photographing apparatus means that the first photographing apparatus may totally photograph the photographing region of the first photographing apparatus. That is, the photographing direction of the first photographing apparatus is adjusted, so that the first photographing apparatus can totally photograph the photographing region of the first photographing apparatus. In this case, because the rotation speed of the first photographing apparatus is zero, the photographing direction of the first photographing apparatus is a fixed direction.

The rotation speed of the first photographing apparatus is zero. In this case, a photographing effect of the first photographing apparatus on the key region is good.

Case 2: A photographing region of the first photographing apparatus is a non-key region.

In this case, a region corresponding to a photographing direction of the first photographing apparatus covers the photographing region of the first photographing apparatus, and a rotation speed of the first photographing apparatus is less than or equal to a first threshold.

That a region corresponding to a photographing direction of the first photographing apparatus covers the photographing region of the first photographing apparatus means that the first photographing apparatus may totally photograph the photographing region of the first photographing apparatus through rotation. That is, the photographing direction of the first photographing apparatus is adjusted, so that the first photographing apparatus can totally photograph the photographing region of the first photographing apparatus through rotation. In this case, because the rotation speed of the first photographing apparatus is greater than zero, the photographing direction of the first photographing apparatus is a direction interval.

Optionally, the rotation speed of the first photographing apparatus may be determined in the following manner: determining a photographing angle and an imaging frequency of the photographing region of the first photographing apparatus, and determining an initial rotation speed of the first photographing apparatus based on the photographing angle and the imaging frequency of the photographing region. A product of the photographing angle and the imaging frequency may be determined as the rotation speed. For example, it is assumed that the photographing angle of the photographing region of the first photographing apparatus is θ, and a minimum imaging frequency is f₁. In this case, the rotation speed of the first photographing apparatus is v₁, and v₁ = θ × f₁. The rotation speed is a minimum rotation speed of the first photographing apparatus.

For example, refer to FIG. 8. The photographing region of the photographing apparatus C is the region 3, a photographing angle corresponding to the region 3 is θ, and an imaging frequency is f₁. In this case, a rotation speed of the photographing apparatus C is v₁ = θ × f1, that is, the photographing apparatus C rotates in the region 3, so that the photographing apparatus C can totally obtain an image in the region 3 through photographing.

Optionally, to prevent quality of an image obtained through photographing from being deteriorated or precision of the rotation speed from being poor due to an excessively high rotation speed of the photographing apparatus, after the rotation speed of the first photographing apparatus is calculated by using the foregoing formula, the calculated rotation speed may be updated:

If the rotation speed calculated by using the foregoing formula is greater than a first threshold, the rotation speed of the first photographing apparatus is updated to the first threshold. In this way, the rotation speed can be prevented from being excessively large. In this case, alarm information may be further generated to prompt the user to replace the photographing apparatus or modify the running mode of the vehicle.

If the rotation speed calculated by using the foregoing formula is less than a first threshold, the rotation speed calculated by using the foregoing formula may not be updated, or the rotation speed of the first photographing apparatus may be updated to a weighted average value of the value calculated by using the foregoing formula and the first threshold. In this way, precision of the rotation speed can be improved.

S606: Control, based on the photographing information, each photographing apparatus to obtain a plurality of images through photographing.

The plurality of images are used to assist the vehicle in running.

For any photographing apparatus, the photographing apparatus is controlled, based on photographing information of the photographing apparatus, to perform photographing to obtain a plurality of images.

If a photographing region corresponding to the photographing apparatus is a key region, a photographing direction of the photographing apparatus is adjusted, where the photographing direction is a fixed direction, so that the photographing apparatus performs photographing in the photographing direction. A rotation speed of the photographing apparatus is zero.

If a photographing region corresponding to the photographing apparatus is a non-key region, a photographing direction and a rotation speed of the photographing apparatus are determined, where the photographing direction is a direction interval, so that the photographing apparatus rotates in the direction interval based on the rotation speed to perform photographing.

Optionally, during photographing of the photographing apparatus, at least one piece of the following information may be further displayed on a vehicle-mounted device: a key region, a non-key region, a photographing region of each photographing apparatus, and a rotation speed of each photographing apparatus.

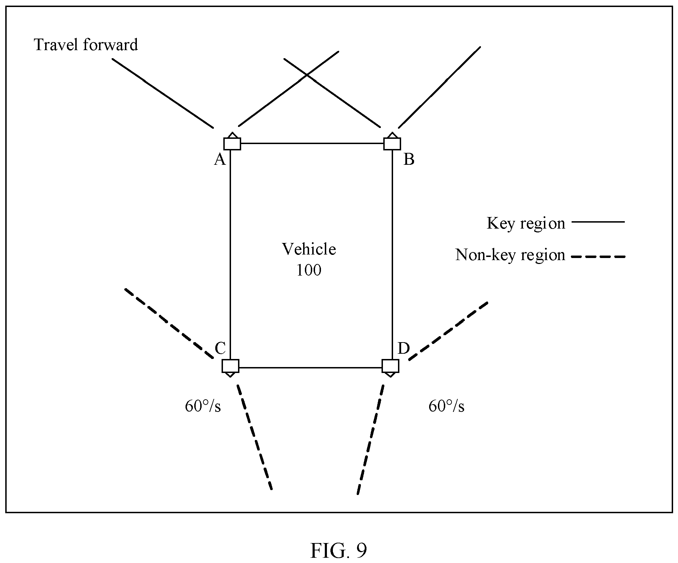

The following describes, with reference to FIG. 9, information displayed by the vehicle-mounted device.

FIG. 9 is a schematic diagram of a display page of a vehicle-mounted device according to an embodiment of this application. Refer to FIG. 9. The display page includes traveling information (traveling forward) of a vehicle, a schematic diagram of the vehicle, a schematic diagram of a photographing apparatus, a photographing region of each photographing apparatus, a rotation speed of each photographing apparatus, a key region, and a non-key region. For example, a photographing apparatus A, a photographing apparatus B, a photographing apparatus C, and a photographing apparatus D are disposed on the vehicle. A photographing region of each photographing apparatus is shown by a frame line near the photographing apparatus, rotation speeds of the photographing apparatus A and the photographing apparatus B are zero (that is, if the rotation speeds are not marked, it indicates that the rotation speeds are zero), and rotation speeds of the photographing apparatus C and the photographing apparatus D are respectively 60 degrees per second.

In the embodiment shown in FIG. 6, when the vehicle is in the traveling mode, the key region and the non-key region may be determined based on the traveling information of the vehicle, and the photographing apparatus is controlled, based on the key region and the non-key region, to perform photographing. A large quantity of images may be obtained through photographing in the key region, and a small quantity of images may be obtained through photographing in the non-key region. In this way, reliable image information can be provided for traveling of the vehicle, and a quantity of images to be photographed and a quantity of images to be processed can be reduced, so that the vehicle can quickly determine an obtained image processing result, and assist, in a timely manner based on the image processing result, the vehicle in traveling.

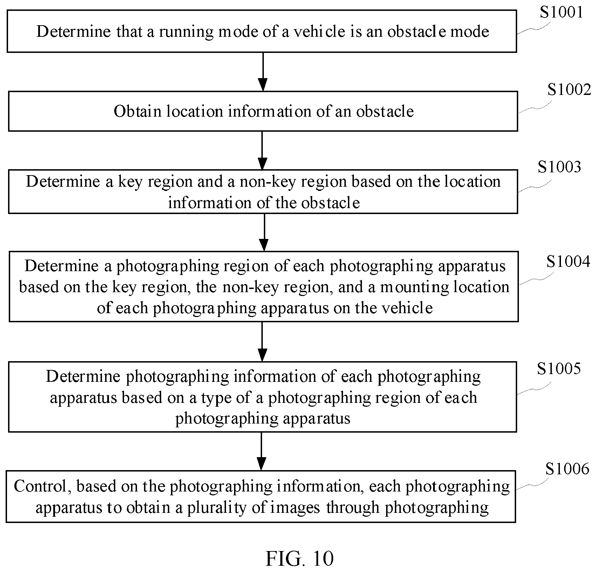

FIG. 10 is a schematic flowchart of still another device control method according to an embodiment of this application. In the embodiment shown in FIG. 10, a running mode of a vehicle is an obstacle mode. Refer to FIG. 10. The method may include the following steps.

S1001: Determine that a running mode of a vehicle is an obstacle mode.

It should be noted that, it may be determined, in the manner described in S301, that the running mode of the vehicle is the obstacle mode.

S1002: Obtain location information of an obstacle.

A distance between the obstacle in this embodiment of this application and the vehicle is less than or equal to a preset distance, that is, the obstacle in this embodiment of this application is an obstacle that may cause a safety risk to safe traveling of the vehicle. There may be one or more obstacles.

The location information of the obstacle may be location information of the obstacle relative to the vehicle. For example, the location information may include a direction of the obstacle relative to the vehicle and a distance between the obstacle and the vehicle.

Optionally, the location information of the obstacle may be obtained in the following feasible implementation: obtaining an image obtained by a photographing apparatus through photographing, and processing the image to obtain the location information of the obstacle; or obtaining the location information of the obstacle by using an apparatus such as radar.

S1003: Determine a key region and a non-key region based on the location information of the obstacle.

Based on the location information of the obstacle, a region in which the obstacle is located may be set as a key region, and a region other than the key region may be set as a non-key region.

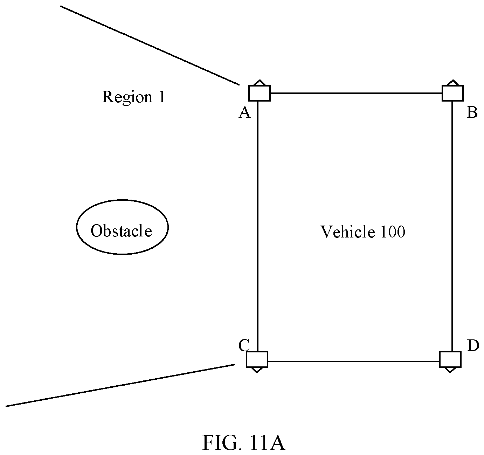

With reference to FIG. 11A, the following describes the key region and the non-key region in the obstacle mode by using a specific example.

FIG. 11A is a schematic diagram of still yet another key region and still yet another non-key region according to an embodiment of this application. Refer to FIG. 11A. There is an obstacle around the vehicle, and the obstacle is located on the left of the vehicle. In this case, the key region is a region 1, and the non-key region is a region other than the region 1.

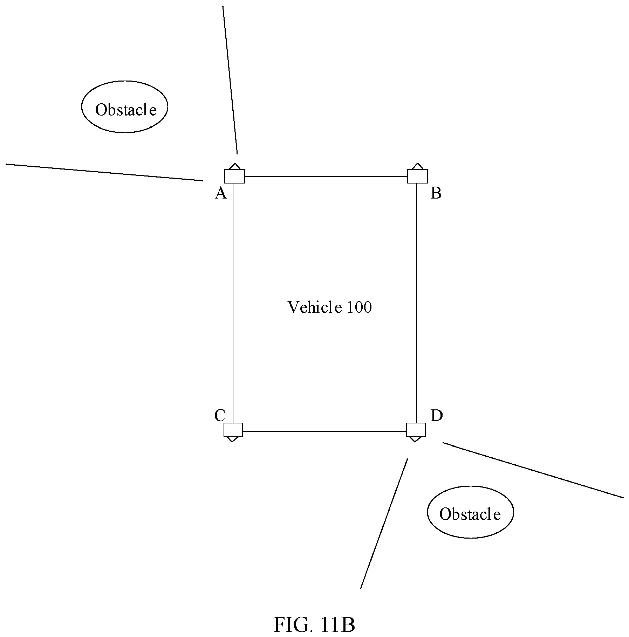

FIG. 11B is a schematic diagram of a further key region and a further non-key region according to an embodiment of this application. Refer to FIG. 11B. There are two obstacles around the vehicle. One obstacle is located on the front left of the vehicle, and the other obstacle is located on the rear right of the vehicle. In this case, the key region is a region 1 and a region 2, and the non-key region is a region other than the region 1 and the region 2.

S1004: Determine a photographing region of each photographing apparatus based on the key region, the non-key region, and a mounting location of each photographing apparatus on the vehicle.

S1005: Determine photographing information of each photographing apparatus based on a type of a photographing region of each photographing apparatus.

S1006: Control, based on the photographing information, each photographing apparatus to obtain a plurality of images through photographing.

It should be noted that, for a process of performing S1004 to S1006, refer to a process of performing S604 to S606. Details are not described herein again.

In the embodiment shown in FIG. 10, when the vehicle is in the obstacle mode, the key region and the non-key region may be determined based on the location information of the obstacle, and the photographing apparatus is controlled, based on the key region and the non-key region, to perform photographing. A large quantity of images may be obtained through photographing in the key region, and a small quantity of images may be obtained through photographing in the non-key region. In this way, reliable image information can be provided for traveling of the vehicle, and a quantity of images to be photographed and a quantity of images to be processed can be reduced, so that the vehicle can quickly determine an obtained image processing result, and assist, in a timely manner based on the image processing result, the vehicle in traveling.

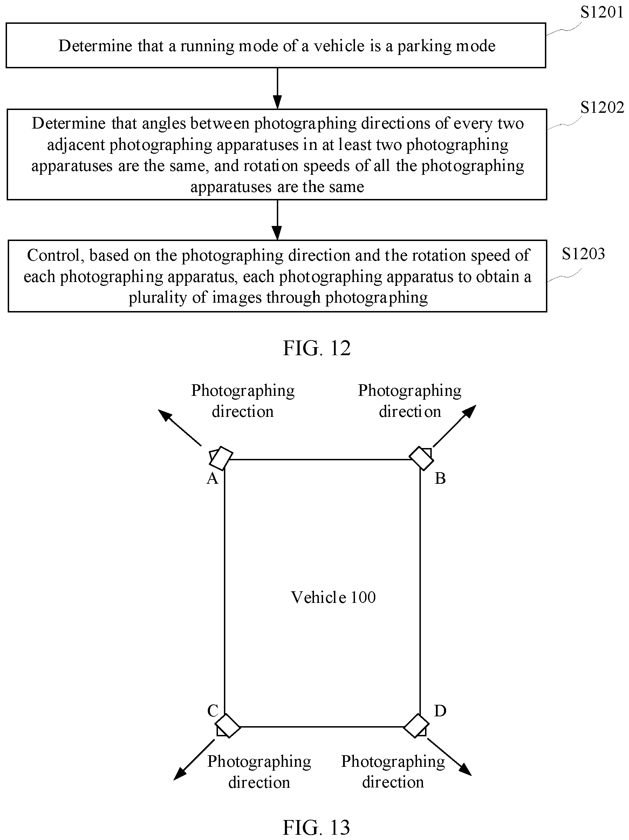

FIG. 12 is a schematic flowchart of still another device control method according to an embodiment of this application. In the embodiment shown in FIG. 12, a running mode of a vehicle is a parking mode. Refer to FIG. 12. The method may include the following steps.

S1201: Determine that a running mode of a vehicle is a parking mode.

It should be noted that, it may be determined, in the manner described in S301, that the running mode of the vehicle is the parking mode.

S1202: Determine that angles between photographing directions of every two adjacent photographing apparatuses in at least two photographing apparatuses are the same, and rotation speeds of all the photographing apparatuses are the same.

At any moment, angles between photographing directions of every two adjacent photographing apparatuses are the same. That is, in a range 360 degrees, photographing directions of the at least two photographing apparatuses are evenly distributed. Optionally, the photographing direction may be a direction in which a lens of the photographing apparatus directly faces.

At any moment, rotation directions of all the photographing apparatuses are the same. In this way, it can be ensured that angles between photographing directions of every two adjacent photographing apparatuses are the same at any moment.

The following describes the photographing direction of the photographing apparatus with reference to FIG. 13.

FIG. 13 is a schematic diagram of a photographing direction of a photographing apparatus according to an embodiment of this application. Refer to FIG. 13. Four photographing apparatuses are disposed on the vehicle, and angles between photographing directions of every two adjacent photographing apparatuses in the four photographing apparatuses are the same. For example, an angle between photographing directions of a photographing apparatus A and a photographing apparatus B is 90 degrees, an angle between photographing directions of the photographing apparatus B and a photographing apparatus D is 90 degrees, an angle between photographing directions of the photographing apparatus D and a photographing apparatus C is 90 degrees, and an angle between photographing directions of the photographing apparatus C and the photographing apparatus A is 90 degrees.

S1203: Control, based on the photographing direction and the rotation speed of each photographing apparatus, each photographing apparatus to obtain a plurality of images through photographing.

The plurality of images are used to assist the vehicle in running.

Initially, the photographing direction of each photographing apparatus may be adjusted, so that angles between photographing directions of every two adjacent photographing apparatuses are the same. In a photographing process, all the photographing apparatuses may be controlled based on a same rotation speed and a same rotation direction, so that angles between photographing directions of every two adjacent photographing apparatuses are the same at any moment.

In the embodiment shown in FIG. 12, when the vehicle is in the parking mode, the photographing apparatus may be controlled to evenly photograph a region around a vehicle body, to continuously monitor the region around the vehicle body. In this way, a reliable basis can be provided for a vehicle rub or a theft event.

When the vehicle is in the self-check mode, each photographing apparatus in the vehicle may be controlled to rotate (the photographing apparatus may rotate randomly). For any second photographing apparatus, in a process in which the second photographing apparatus rotates, at least two images obtained by the second photographing apparatus through photographing are obtained. If a feature similarity between same regions in the at least two images is greater than a second threshold, it is determined that a stain exists on a photographing lens of the second photographing apparatus. The at least two images are obtained by the second photographing apparatus through photograph in a rotation process, or the at least two images correspond to different photographing regions.

In an actual application process, if a stain exists on a photographing lens of the photographing apparatus, in an image obtained by photographing any region by the photographing apparatus, a similarity between images (corresponding to the stain on the photographing lens) of a fixed region is high. Therefore, if the feature similarity between same regions in the at least two images is greater than the second threshold, it may be determined that a stain exists on the photographing lens of the second photographing apparatus.

Optionally, before the vehicle starts, the running mode of the vehicle may be set to the parking mode, to detect whether a stain exists on the photographing lens of the photographing apparatus; or when the vehicle just starts, the running mode of the vehicle may be set to the parking mode, to detect whether a stain exists on the photographing lens of the photographing apparatus; or in a running process of the vehicle, the running mode of the vehicle may be set to the parking mode, to detect whether a stain exists on the photographing lens of the photographing apparatus.

In an actual application process, after any photographing apparatus in the vehicle is faulty, the vehicle may update the photographing information of each photographing apparatus, to avoid a photographing blind region.

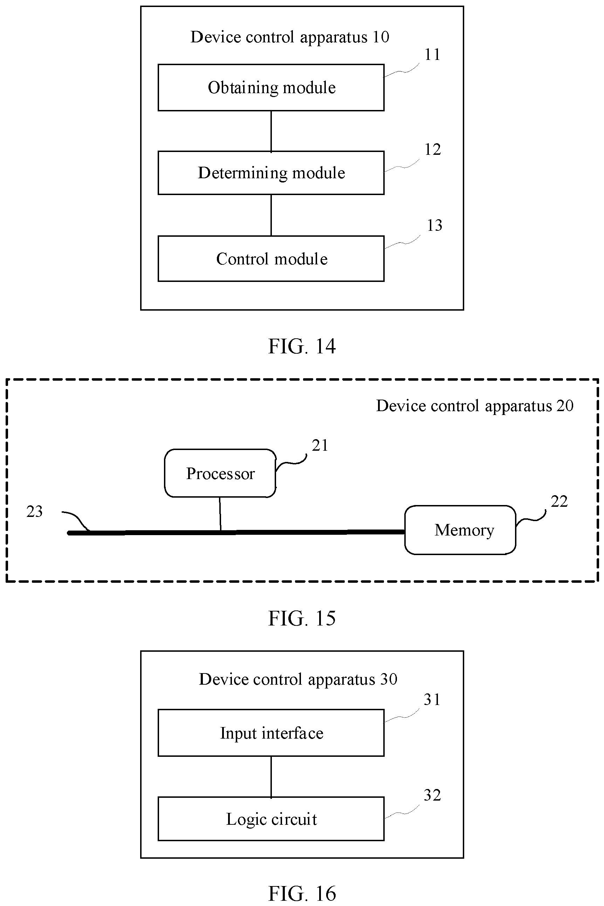

FIG. 14 is a schematic diagram of a structure of a device control apparatus according to an embodiment of this application. A device control apparatus 10 may be applied to a vehicle. At least two rotatable photographing apparatuses are disposed on the vehicle. The device control apparatus 10 includes an obtaining module 11, a determining module 12, and a control module 13.

The obtaining module 11 is configured to obtain a running mode of the vehicle.

The determining module 12 is configured to determine photographing information of each photographing apparatus based on the running mode, where the photographing information includes a photographing direction and a rotation speed.

The control module 13 is configured to control, based on the photographing information, each photographing apparatus to obtain a plurality of images through photographing, where the plurality of images are used to assist the vehicle in running.

Optionally, the obtaining module 11 may perform S301 in the embodiment in FIG. 3, S601 in the embodiment in FIG. 6, S1001 in the embodiment in FIG. 10, and S1201 in the embodiment in FIG. 12.

Optionally, the determining module 12 may perform S302 in the embodiment in FIG. 3, S602 to S605 in the embodiment in FIG. 6, S1002 to S1005 in the embodiment in FIG. 10, and S1202 and S1202 in the embodiment in FIG. 12.

Optionally, the control module 13 may perform S303 in the embodiment in FIG. 3, S606 in the embodiment in FIG. 6, S1006 in the embodiment in FIG. 10, and S1203 in the embodiment in FIG. 12.

It should be noted that, the device control apparatus in this application may perform the technical solutions in the foregoing method embodiments. Implementation principles and beneficial effects thereof are similar, and details are not described herein again.

In a possible implementation, the running mode includes any one of the following: a traveling mode, an obstacle mode, a parking mode, and a self-check mode.

In a possible implementation, the determining module 12 is specifically configured to:
determine a photographing region of each photographing apparatus based on the running mode; and
determine the photographing information of each photographing apparatus based on the photographing region of each photographing apparatus.

In a possible implementation, the running mode is a traveling mode or an obstacle mode, and the determining module 12 is specifically configured to:
determine, based on the running mode, a key region and a non-key region that are to be monitored, where the key region and the non-key region are regions around of the vehicle; and
determine the photographing region of each photographing apparatus based on the key region, the non-key region, and a mounting location of each photographing apparatus on the vehicle.

In a possible implementation, for any first photographing apparatus, the determining module 12 is specifically configured to:
obtain a type of the photographing region of the first photographing apparatus, where the type of the photographing region is a key region type or a non-key region type; and
determine photographing information of the first photographing apparatus based on the type of the photographing region of the first photographing apparatus.

In a possible implementation, if the photographing region of the first photographing apparatus is a key region, the photographing information of the first photographing apparatus meets the following conditions:
a region corresponding to a photographing direction of the first photographing apparatus covers the photographing region of the first photographing apparatus; and
a rotation speed of the first photographing apparatus is zero.

In a possible implementation, if the photographing region of the first photographing apparatus is a non-key region, the photographing information of the first photographing apparatus meets the following conditions:
a region corresponding to a photographing direction of the first photographing apparatus covers the photographing region of the first photographing apparatus; and
a rotation speed of the first photographing apparatus is less than or equal to a first threshold.

In a possible implementation, the running mode is a traveling mode, and the determining module 12 is specifically configured to:
obtain traveling information of the vehicle; and
determine the key region and the non-key region based on the traveling mode and the traveling information.

In a possible implementation, the running mode is an obstacle mode, and the determining module 12 is specifically configured to:
obtain location information of an obstacle; and
determine the key region and the non-key region based on the obstacle mode and the location information.

In a possible implementation, the running mode is a parking mode, angles between photographing directions of every two adjacent photographing apparatuses are the same, and rotation speeds of all the photographing apparatuses are the same.

In a possible implementation, the running mode is a self-check mode, and the determining module 12 is further configured to:
obtain at least two images obtained by a second photographing apparatus through photographing, where the second photographing apparatus is any one of the at least two rotatable photographing apparatuses; and
if a feature similarity between same regions in the at least two images is greater than a second threshold, determine that a stain exists on a photographing lens of the second photographing apparatus.

It should be noted that, the device control apparatus in this application may perform the technical solutions in the foregoing method embodiments. Implementation principles and beneficial effects thereof are similar, and details are not described herein again.

FIG. 15 is a schematic diagram of a hardware structure of a device control apparatus according to this application. Refer to FIG. 15. A device control apparatus 20 may include a processor 21 and a memory 22. The processor 21 may communicate with the memory 22. For example, the processor 21 communicates with the memory 22 by using a communication bus 23. The memory 22 is configured to store program instructions, and the processor 21 is configured to run the program instructions in the memory to perform the device control method in any one of the foregoing method embodiments.

Optionally, the processor 21 may implement the steps in the foregoing method embodiments.

Optionally, the processor 21 may perform functions of modules (the obtaining module 11, the determining module 12, and the control module 13) in the embodiment in FIG. 14.

The device control apparatus 20 may further include a transmitter and/or a receiver.

FIG. 16 is a schematic diagram of a structure of another device control apparatus according to an embodiment of this application. Refer to FIG. 16. A device control apparatus 30 may include an input interface 31 and a logic circuit 32.

The input interface 31 is configured to obtain a running mode of a vehicle.

The logic circuit 32 is configured to: determine photographing information of each photographing apparatus based on the running mode, and control, based on the photographing information, each photographing apparatus to obtain a plurality of images through photographing, where the photographing information includes a photographing direction and a rotation speed, and the plurality of images are used to assist the vehicle in running.

Optionally, the logic circuit 32 may further have other functions of the determining module 12 and the control module 13 in FIG. 14. Details are not described herein again.

This application provides a readable storage medium. The readable storage medium stores a computer program, and the computer program is used to implement the device control method in any one of the foregoing embodiments.

An embodiment of this application provides a computer program product. The computer program product includes instructions, and when the instructions are executed, a computer is enabled to perform the foregoing device control method.

All or some of the steps of the foregoing method embodiments may be implemented by a program instructing related hardware. The foregoing program may be stored in a readable memory. When the program is executed, the steps in the foregoing method embodiments are performed. The memory (storage medium) includes: a read-only memory (read-only memory, ROM for short), a RAM, a flash memory, a hard disk, a solid-state drive, a magnetic tape (English: magnetic tape), a floppy disk (floppy disk), an optical disc (optical disc), and any combination thereof.

Embodiments of this application are described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processing unit of another programmable data processing device to generate a machine, so that the instructions executed by the computer or the processing unit of the another programmable data processing device generate an apparatus for implementing a specified function in one or more processes in the flowcharts and/or in one or more blocks in the block diagrams.

These computer program instructions may be stored in a computer-readable memory that can instruct the computer or the another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may be loaded onto a computer or another programmable data processing device, so that a series of operations and steps are performed on the computer or the another programmable device to generate computer-implemented processing. Therefore, the instructions executed on the computer or the another programmable device provide steps for implementing a specific function in one or more processes in the flowcharts and/or in one or more blocks in the block diagrams.

Clearly, a person skilled in the art can make various modifications and variations to embodiments of this application without departing from the spirit and scope of this application. In this way, this application is intended to cover these modifications and variations to embodiments of this application provided that they fall within the scope of protection defined by the following claims and their equivalent technologies.

In this application, the term "include" and a variant thereof may refer to non-limitative inclusion, and the term "or" and a variant thereof may refer to "and/or". In this application, the terms "first", "second", and the like are intended to distinguish between similar objects, but do not necessarily indicate a specific order or sequence. "A plurality of" in this application refers to two or more than two. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

## Claims

1. A device control method, applied to a vehicle, wherein at least two rotatable photographing apparatuses are disposed on the vehicle, and the method comprises:
obtaining a running mode of the vehicle;
determining photographing information of each photographing apparatus based on the running mode, wherein the photographing information comprises a photographing direction and a rotation speed; and
controlling, based on the photographing information, each photographing apparatus to obtain a plurality of images through photographing, wherein the plurality of images are used to assist the vehicle in running.

2. The method according to claim 1, wherein the running mode comprises any one of the following: a traveling mode, an obstacle mode, a parking mode, and a self-check mode.

3. The method according to claim 1 or 2, wherein the determining photographing information of each photographing apparatus based on the running mode comprises:
determining a photographing region of each photographing apparatus based on the running mode; and
determining the photographing information of each photographing apparatus based on the photographing region of each photographing apparatus.

4. The method according to claim 3, wherein the running mode is a traveling mode or an obstacle mode, and the determining a photographing region of each photographing apparatus based on the running mode comprises:
determining, based on the running mode, a key region and a non-key region that are to be monitored, wherein the key region and the non-key region are regions around of the vehicle; and
determining the photographing region of each photographing apparatus based on the key region, the non-key region, and a mounting location of each photographing apparatus on the vehicle.

5. The method according to claim 4, wherein for any first photographing apparatus, determining photographing information of the first photographing apparatus based on a photographing region of the first photographing apparatus comprises:
obtaining a type of the photographing region of the first photographing apparatus, wherein the type of the photographing region is a key region type or a non-key region type; and
determining the photographing information of the first photographing apparatus based on the type of the photographing region of the first photographing apparatus.

6. The method according to claim 5, wherein if the photographing region of the first photographing apparatus is a key region, the photographing information of the first photographing apparatus meets the following conditions:
a region corresponding to a photographing direction of the first photographing apparatus covers the photographing region of the first photographing apparatus; and
a rotation speed of the first photographing apparatus is zero.

7. The method according to claim 5, wherein if the photographing region of the first photographing apparatus is a non-key region, the photographing information of the first photographing apparatus meets the following conditions:
a region corresponding to a photographing direction of the first photographing apparatus covers the photographing region of the first photographing apparatus; and
a rotation speed of the first photographing apparatus is less than or equal to a first threshold.

8. The method according to any one of claims 4 to 7, wherein the running mode is a traveling mode, and the determining, based on the running mode, a key region and a non-key region that are to be monitored comprises:
obtaining traveling information of the vehicle; and
determining the key region and the non-key region based on the traveling mode and the traveling information.

9. The method according to any one of claims 4 to 7, wherein the running mode is an obstacle mode, and the determining, based on the running mode, a key region and a non-key region that are to be monitored comprises:
obtaining location information of an obstacle; and
determining the key region and the non-key region based on the obstacle mode and the location information.

10. The method according to any one of claims 1 to 3, wherein the running mode is a parking mode, angles between photographing directions of every two adjacent photographing apparatuses are the same, and rotation speeds of all the photographing apparatuses are the same.

11. The method according to any one of claims 1 to 3, wherein the running mode is a self-check mode, and the method further comprises:
obtaining at least two images obtained by a second photographing apparatus through photographing, wherein the second photographing apparatus is any one of the at least two rotatable photographing apparatuses; and
if a feature similarity between same regions in the at least two images is greater than a second threshold, determining that a stain exists on a photographing lens of the second photographing apparatus.

12. A device control apparatus, applied to a vehicle, wherein at least two rotatable photographing apparatuses are disposed on the vehicle, and the apparatus comprises an obtaining module, a determining module, and a control module, wherein
the obtaining module is configured to obtain a running mode of the vehicle;
the determining module is configured to determine photographing information of each photographing apparatus based on the running mode, wherein the photographing information comprises a photographing direction and a rotation speed; and
the control module is configured to control, based on the photographing information, each photographing apparatus to obtain a plurality of images through photographing, wherein the plurality of images are used to assist the vehicle in running.

13. The apparatus according to claim 12, wherein the running mode comprises any one of the following: a traveling mode, an obstacle mode, a parking mode, and a self-check mode.

14. The apparatus according to claim 12 or 13, wherein the determining module is specifically configured to:
determine a photographing region of each photographing apparatus based on the running mode; and
determine the photographing information of each photographing apparatus based on the photographing region of each photographing apparatus.

15. The apparatus according to claim 14, wherein the running mode is a traveling mode or an obstacle mode, and the determining module is specifically configured to:
determine, based on the running mode, a key region and a non-key region that are to be monitored, wherein the key region and the non-key region are regions around of the vehicle; and
determine the photographing region of each photographing apparatus based on the key region, the non-key region, and a mounting location of each photographing apparatus on the vehicle.

16. The apparatus according to claim 15, wherein for any first photographing apparatus, the determining module is specifically configured to:
obtain a type of the photographing region of the first photographing apparatus, wherein the type of the photographing region is a key region type or a non-key region type; and
determine photographing information of the first photographing apparatus based on the type of the photographing region of the first photographing apparatus.

17. The apparatus according to claim 16, wherein if the photographing region of the first photographing apparatus is a key region, the photographing information of the first photographing apparatus meets the following conditions:
a region corresponding to a photographing direction of the first photographing apparatus covers the photographing region of the first photographing apparatus; and
a rotation speed of the first photographing apparatus is zero.

18. The apparatus according to claim 16, wherein if the photographing region of the first photographing apparatus is a non-key region, the photographing information of the first photographing apparatus meets the following conditions:
a region corresponding to a photographing direction of the first photographing apparatus covers the photographing region of the first photographing apparatus; and
a rotation speed of the first photographing apparatus is less than or equal to a first threshold.

19. The apparatus according to any one of claims 15 to 18, wherein the running mode is a traveling mode, and the determining module is specifically configured to:
obtain traveling information of the vehicle; and
determine the key region and the non-key region based on the traveling mode and the traveling information.

20. The apparatus according to any one of claims 15 to 18, wherein the running mode is an obstacle mode, and the determining module is specifically configured to:
obtain location information of an obstacle; and
determine the key region and the non-key region based on the obstacle mode and the location information.

21. The apparatus according to any one of claims 12 to 14, wherein the running mode is a parking mode, angles between photographing directions of every two adjacent photographing apparatuses are the same, and rotation speeds of all the photographing apparatuses are the same.

22. The apparatus according to any one of claims 12 to 14, wherein the running mode is a self-check mode, and the determining module is further configured to:
obtain at least two images obtained by a second photographing apparatus through photographing, wherein the second photographing apparatus is any one of the at least two rotatable photographing apparatuses; and
if a feature similarity between same regions in the at least two images is greater than a second threshold, determine that a stain exists on a photographing lens of the second photographing apparatus.

23. A data processing apparatus, wherein the data processing apparatus comprises a memory and a processor, the memory stores computer program instructions, and the processor runs the computer program instructions to perform the method according to any one of claims 1 to 11.

24. A computer storage medium, comprising computer instructions, wherein when the computer instructions are run by a processor, the method according to any one of claims 1 to 11 is implemented.
